Europäisches Patentamt

**European Patent Office**

**Office européen des brevets**

(19)

(11) Veröffentlichungsnummer : **0 228 393**
**B1**

(12) # EUROPÄISCHE PATENTSCHRIFT

(45) Veröffentlichungstag der Patentschrift :
**28.03.90**

(21) Anmeldenummer : **86903335.7**

(22) Anmeldetag : **16.05.86**

(86) Internationale Anmeldenummer :
**PCT/EP 86/00296**

(87) Internationale Veröffentlichungsnummer :
**WO/86070 (04.12.86 Gazettee 86/26)**

(51) Int. Cl.$^5$ : **B 32 B   7/04**, B 32 B 27/12,
A 01 G  13/02

(54) **MEHRLAGIGER ISOLATIONSKÖRPER, VERFAHREN ZU SEINER HERSTELLUNG UND SEINE VERWENDUNG.**

(30) Priorität : **21.05.85 CH 2157/85**
**20.09.85 CH 4039/85**

(43) Veröffentlichungstag der Anmeldung :
**15.07.87 Patentblatt 87/29**

(45) Bekanntmachung des Hinweises auf die Patenterteilung : **28.03.90 Patentblatt 90/13**

(84) Benannte Vertragsstaaten :
**AT BE CH DE FR GB IT LI LU NL SE**

(56) Entgegenhaltungen :
**CH--A--   522 502**
**FR--A-- 1 390 271**
**FR--E--   71 891**
**GB--A-- 1 035 490**
**US--A-- 3 975 859**

(73) Patentinhaber : **BREVETEAM S.A.**
**c/o Dr. Paul Stadlin Gartenstrasse 2 Postfach 758**
**CH-6300 Zug (CH)**

(72) Erfinder : **Der Erfinder hat auf seine Nennung verzichtet**

(74) Vertreter : **Lesser, Karl-Bolko, Dipl.-Ing.**
**European Patent Attorney Johanneskirchnerstrasse
149a**
**D-8000 München 81 (DE)**

## Beschreibung

Die Erfindung betrifft einen mehrlagigen Isolationskörper gemäß Oberbegriff des Anspruches 1, ein Verfahren zu seiner Herstellung und seine Verwendung.

Isolationskörper werden z. B. als Schutzfolien benutzt, um eine Wärme- und/oder Feuchtigkeitsisolierung zu erhalten, sei es, daß sich eine Person gegen Temperaturen und/oder Feuchtigkeit schützen will oder man Pflanzen, Maschinen, Baustellen usw. gegen Witterungseinflüsse schützen will.

Schutzfolien, insbesondere mehrlagige Schutzfolien, werden auch als Dämpfungsmaterial gegen Stöße od. dgl. eingesetzt.

So ist z. B. eine sogenannte Näpfchenfolie bekannt, die aus zwei teilflächig miteinander verbundenen Kunststoffolien besteht, von denen mindestens eine näpfchenartige Ausbuchtungen enthält. Diese beiden Folien sind an den näpfchenfreien Stellen so miteinander verbunden, daß in den sich von der anderen Kunststoffolie weg erstreckenden Näpfchen Luft dicht eingeschlossen ist. Wird ein Druck auf die Folie ausgeübt, so wird die Luft in den Näpfchen komprimiert. Ein Stoß od. dgl. kann dadurch gedämpft werden. Die Herstellung solcher Näpfchenfolien ist jedoch relativ teuer. Dazu wird in der Regel eine flache Folie, in die die Näpfchen eingebracht werden sollen, übe eine Walze geführt, in deren Oberfläche näpfchenartige Vertiefungen angeordnet sind. In diese Vertiefungen wird die Folie zum Teil hineingezogen, also tiefgezogen. Auf diese tiefgezogene, sich immer noch auf der Walze befindliche erste Folie wird nun eine zweite Folie gelegt und mit ersterer an den näpfchenfreien Stellen vollflächig verklebt. Durch das Tiefziehen ist die Wandstärke der Näpfchen aufweisenden Folie unterschiedlich dick.

Es sind auch mehrlagige Isolationskörper bekannt, bei denen eine Kunststoffolie auf eine Aluminiumfolie kaschiert ist. Solche Folien werden z. B. beim Camping als Unterlage zur Wärmeerhaltung des menschlichen Körpers benutzt.

Einlagige Isolationskörper, z. B. Folien, werden auch benutzt, um Pflanzen abzudecken. So ist z. B. aus der DE-A-2.450.114 eine Kunststoffolie in Form einer Bahn zum Abdecken von niedrigen Pflanzenkulturen bekannt, bei der in Längsrichtung der Bahn ausgerichtete Schlitze ein Dehnen der Bahn in Querrichtung der Bahn entsprechend dem Wachstum der Pflanzen gestatten.

Der Erfindung liegt die Aufgabe zugrunde, einen gattungsgemäßen Isolationskörper zu schaffen, dar gegenüber den bekannten Isolationskörpern weitere Vorteile aufweist.

Diese Aufgabe wird durch den Gegenstand des Anspruches 1 gelöst. Der erfindungsgemäße Isolationskörper weist zwischen den beiden Außenschichten eine Fasern enthaltende Zwischenschicht auf, wobei mindestens die beiden Außenschichten teilflächig miteinander verbunden, vorzugsweise verschweißt, sind. Die beiden Außenschichten können aber auch miteinander durch die Zwischenschicht hindurch und auch mit dieser verklebt sein. Im Bereich der Verbindungsstellen sind außerdem den ganzen Isolationskörper durchdringende Durchbrechungen angeordnet. Die Fasern können insbesondere textile Fasern sein.

Den Fasern der Zwischenschicht kommen dabei verschiedene Aufgaben zu. Dort, wo keine Verbindungs- bzw. Schweißstellen sind, dienen die dann lockeren Fasern dazu, die beiden Außenschichten voneinander beabstandet zu halten, wobei sich zwischen diesen und zwischen den sie beabstandenden Fasern ein Luftpolster ausbildet. An den Verbindungsstellen dienen die mitverschweißten oder mitverklebten Fasern dazu, die Verbindungsstellen zu verstärken.

Es wird dadurch ein mehrlagiger Isolationskörper erhalten, der isolierend wirkt und trotzdem durchlässig ist.

Die Verbindungsstellen können flächig verschiedene Formen aufweisen. Neben punktförmigen Verbindungsstellen sind besonders streifenförmige Verbindungsstellen bevorzugt. Solche streifenförmigen Verbindungsstellen können so angeordnet sein, daß die Streifen in Reihen angeordnet sind, in denen ihre Längserstreckung liegt. Schweißstellen benachbarter Reihen können gegeneinander versetzt sein, insbesondere können sich dann die Schweißstellen benachbarter Reihen überlappen. Es ergibt sich dann ein Isolationskörper, der in der Längserstreckung eine andere Biegeelastizität aufweist, als quer dazu.

Die Verbindungsstellen können über den ganzen Isolationskörper verteilt angeordnet sein. Insbesondere streifenförmige Verbindungsstellen können dabei über die Fläche des Isolationskörpers ein Muster bildend ausgerichtet sein.

Vorzugsweise ist der Isolationskörper bahnförmig ausgebildet und die streifenförmigen Verbindungsstellen sind parallel zu den Längsrändern der Bahn ausgerichtet, wobei sich die Verbindungsstellen vorzugsweise durchgehend über die gesamte Länge der Bahn erstrecken. Auch können die Verbindungsstellen einander benachbarter Reihen gegeneinander versetzt, vorzugsweise einander überlappend, angeordnet sein.

Die beiden Außenschichten können aus verschiedenen Materialien bestehen. Bevorzugt besteht mindestens eine Außenschicht aus einem gas- und dampfdichten Material, vorzugsweise aus einer Kunststoffolie. Die andere Außenschicht kann aus derselben Folie bestehen ; sie oder auch beide Außenschichten können aber auch durch Gewebe, vorverfestigte, z. B. genadelte Faservliese, Vliesstoff oder Spunbonds od. dgl. gebildet werden. Diese zweite Außenschicht muß also nicht gas- und dampfdicht sein.

Die den gesamten Isolationskörper im Bereich der Verbindungsstellen durchdringenden Durchbrechungen bestehen in einer besonders bevorzugten Ausführungsform aus vorzugsweise länglichen, geraden Schlitzen, die bevorzugt in der Längsachse der Verbindungsstellen angeordnet sind und von deren Rändern vorzugsweise gleichmäßig beabstandet sind.

Wenngleich nun der Isolationskörper als Ganzes auch dann nicht mehr gas- und dampfdicht ist, wenn die beiden Außenschichten aus einem gas- und dampfdichten Material bestehen, so sind die in ihm enthaltenen textilen Fasern gegenüber der Umgebungsatmosphäre dadurch geschützt, daß sich die Durchbrechungen nur in dem Bereich befinden, in dem die Verbindungsstellen angeordnet sind.

Je nach Muster der Verbindungsstellen können die Schlitze über die Fläche des Isolationskörpers ein entsprechendes Muster bilden.

Sind zumindest die Schlitze in zueinander parallelen Reihen jeweils versetzt angeordnet, so kann ein solcher Isolationskörper quer zu der Längserstreckung dieser Reihen gestreckt werden, wobei sich die Schlitze unter Verwindung der zwischen ihnen angeordneten Stege öffnen.

Ein solcherart ausgebildeter Isolationskörper kann dann als Abdeckfolie für Pflanzenkulturen benutzt werden, wie dies z. B. in der DE-A-2.450.114 beschrieben ist. Gegenüber dieser bekannten, geschlitzten Folie hat der erfindungsgemäße Isolationskörper die Vorteile, daß er nicht nur stabiler ist, insbesondere die Schlitze bei stärkerer Beanspruchung nicht weiterreißen, sondern er bietet darüberhinaus eine bessere Wärmedämmung, als die bekannte Folie. Die Vorteile des selbstständigen « Mitwachsens » der Folie beim Wachstum der Pflanzen bleiben erhalten.

Ein erfindungsgemäßer Isolationskörper mit oder ohne Schlitze kann aber auch als Schutz von Menschen und Tieren, sowie von Maschinen, Baustellen od. dgl., zur Wärme- und Feuchtigkeitsdämmung benutzt werden. Durch die durch die Schlitze gegebene Dehnbarkeit der Folie paßt sich dieser Isolationskörper dem menschlichen bzw. tierischen Körper oder anderen damit zu schützenden Körpern sehr leicht an.

Durch die Durchbrechungen kann Luft und Feuchtigkeit, wie Schweiß od. dgl., durch den Körper hindurchdringen, ohne daß die in dem Isolationskörper enthaltenen, z. B. textilen Fasern, wie Einzelfasern, künstliche Daunen, Faservliese, Kugelgarne (EP-A-0.013.427) od. dgl. mit dieser Luft bzw. dieser Feuchtigkeit in Kontakt kommen. Es ist deshalb nicht mehr notwendig, einen solchen Isolationskörper innerlich zu reinigen oder zu lüften.

Ein solcher z. B. schon im Bereich der Durchbrechungen geschlitzter Isolationskörper kann darüberhinaus auch in einer der beiden Außenschichten Durchbrechungen, z. B. Schlitze aufweisen, wenn dies gewünscht wird. Bei entsprechender Anordnung der Schlitze läßt sich ein leichteres Drapieren eines solchen Isolationskörpers erreichen.

Ein Verfahren zur Herstellung eines solchen Isolationskörpers ist dadurch gekennzeichnet, daß eine Fasern enthaltende Schicht zwischen zwei Außenschichten eingebracht wird und mindestens die beiden Außenschichten durch die Fasern enthaltende Zwischenschicht hindurch miteinander verbunden, vorzugsweise miteinander verschweißt oder verklebt werden, woraufhin der Isolationskörper im Bereich der Verbindungsstellen mit Durchbrechungen versehen wird...

Ein solches Verschweißen kann dabei verschieden durchgeführt werden. Je nach verwendeten Materialien für die Fasern und die beiden Außenschichten und je nach verwendeter Schweißtemperatur können beim Verschweißen die Fasern im Schweißbereich zerstört werden, indem sie z. B. mit den Außenschichten verschmelzen ; die Fasern können aber auch nur soweit angeschmolzen werden, daß ihre Oberfläche mit den Außenschichten lediglich verklebt wird. Man kann z. B. für die Fasern ein Material verwenden, welches bei der Schmelztemperatur des Materials der Außenschichten noch nicht schmilzt, sodaß die Fasern nur durch die Außenschichten mit diesen verklebt werden. Wesentlich ist dabei, daß im Bereich der Schweißstellen die beiden Außenschichten, die Fasern dabei zwischen sich einschließend, so miteinander verbunden werden, daß eine gas- und dampfdichte Verbindung entsteht.

Bevorzugt wird in der Zwischenschicht ein Gemisch von Fasern verwendet. Ein solches Gemisch kann grobe und feine Fasern aufweisen, wobei davon Gebrauch gemacht wird, daß die feineren Fasern leichter und insbesondere schneller schmelzen, als gröbere Fasern des gleichen Materials. Es kann aber auch eine Mischung aus niedrig- und hochschmelzenden oder unschmelzbaren Fasern verwendet werden, wie auch eine Kombination beider Mischungen verwendet werden kann. Insbesondere dann, wenn nur unschmelzbare Fasern verwendet werden, ist bei der Auswahl des Materials der beiden Außenschichten darauf zu achten, daß diese an den Fasern anhaften können.

Je nachdem, wie der Querschnitt eines solchen Isolationskörper aussehen soll, gibt es verschiedene Möglichkeiten, die drei Schichten zueinander anzuordnen, bevor sie miteinander verbunden werden.

So kann auf die eine bahnförmige Außenschicht die Zwischenschicht und auf diese die zweite Außenschicht gleichmäßig eben aufgelegt werden, woraufhin mindestens die beiden Außenschichten an bestimmten Verbindungsstellen miteinander verbunden werden.

Auch ist es möglich, eine bahnförmige Außenschicht quer zu ihrer Längsrichtung aus der Ebene heraus wellenförmig zu verformen, die Fasern für die Zwischenschicht im wesentlichen nur in die Wellentäler abzulegen und nach dem Aufbringen der zweiten Außenschicht mindestens die beiden Außenschichten im Bereich der Wellenberge der gewellten Außenschicht miteinander zu verbinden.

Es kann aber auch eine bahnförmige Außenschicht aus einer schrumpfbaren Bahn, vorzugsweise einer Kunststoffolie, bestehen und die Zwischenschicht und die andere Außenschicht im wesentlichen eben auf die schrumpfbare Bahn gebracht und mit dieser teilflächig verbunden werden, woraufhin die mehrschichtige Bahn unter Schrumpfung nur der einen schrumpfbaren Bahn einem Schrumpfungsprozeß unterworfen wird. Vorteilhafterweise wird die schrumpfbare Bahn nur quer zur Längsrichtung der Bahn geschrumpft.

Durch die beiden zuletzt beschriebenen Maßnahmen läßt sich erreichen, daß wenigstens die eine der beiden Außenschichten trotz der die beiden Außenschichten verbindenden Verbindungsstellen im wesentlichen eben bleibt.

Sollen die Durchbrechungen Schlitze sein, wird gleichzeitig zum Verschweißen bew. Verkleben oder auch danach der Isolationskörper im Bereich von streifenförmigen Verbindungsstellen vorzugsweise in deren Längsrichtung durch die drei Schichten hindurch mit Schlitzen versehen. Schlitzverfahren sind insbesondere in der Folienherstellung und Folienbearbeitung bekannt.

Ein solcher Isolationskörper, dessen eine Außenschicht z. B. dampfdicht ist und dessen andere Außenschicht z. B. aus einem Vliesstoff besteht, kann je nach Ausbildung der Zwischenschicht als Kissen und insbesondere als Kissenhülle verwendet werden.

Weitere Vorteile und Einzelheiten der Erfindung ergeben sich aus im Folgenden anhand der Zeichnung beschriebenen Ausführungsbeispielen.

Es zeigt schematisch :

Figur 1 eine Aufsicht auf eine erste Ausführungsform eines Isolationskörpers ;

Figur 2 einen Schnitt durch den Isolationskörper gemäß Figur 1 entlang der Linie II-II ;

Figur 3 einen Schnitt durch den Isolationskörper gemäß Figur 1 entlang der Linie III-III ;

Figur 4 eine vergrößerte Einzelheit « X » gemäß Figur 2 ;

Figur 5 eine vergrößerte Einzelheit « Y » gemäß Figur 3, und

Figur 6 eine Aufsicht auf eine zweite Ausführungsform eines Isolationskörpers.

Ein mehrlagiger Isolationskörper 1 besteht aus zwei außenliegenden Kunststoffolien 2 und 3, zwischen denen eine textile Fasern 4 enthaltende Zwischenschicht 5 angeordnet ist. Diese drei Schichten 2, 3 und 4 sind an bestimmten Verbindungsstellen 6 miteinander verbunden — hier miteinander verschweißt. Gemäß den Figuren sind diese Schweißstellen 6 streifenförmig ausgebildet.

An den Schweißstellen sind nun nicht nur die beiden Kunststoffolien 2 und 3 miteinander verschweißt, sondern zwischen diesen auch die Fasern 4 der Zwischenschicht 5, sodaß hier eine gasdichte Verschweißung aller drei Lagen vorliegt.

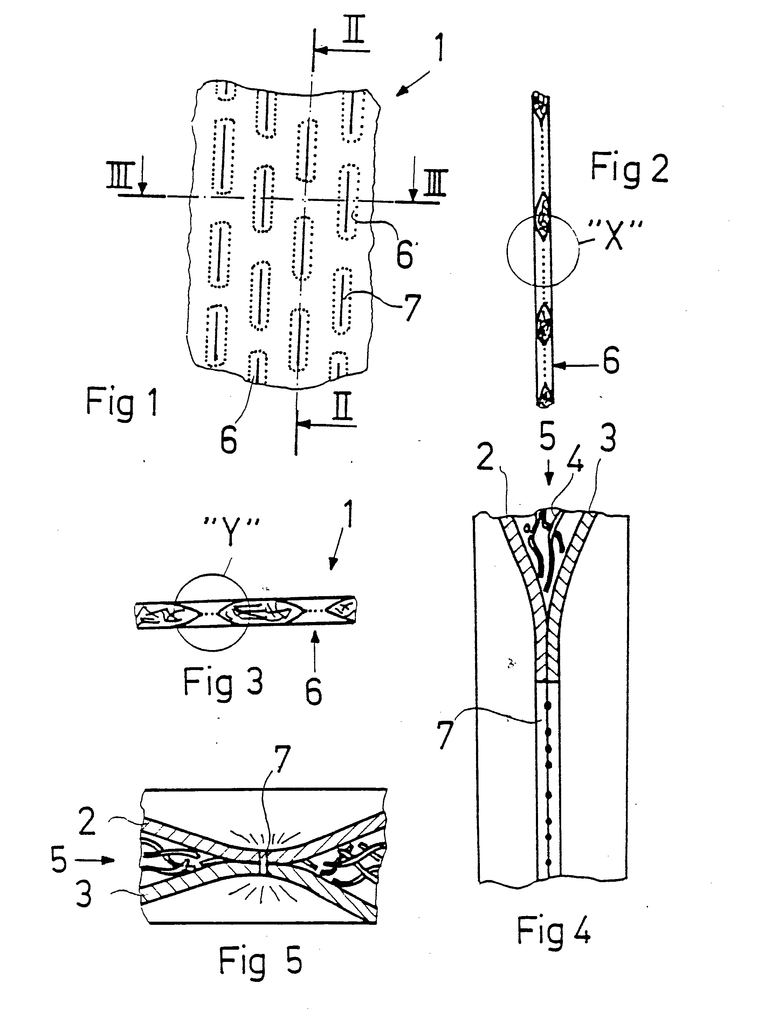

Gemäß Figur 1 ist der gesamte Isolationskörper 1, von dem dort nur ein Teil dargestellt ist, mit Reihen von Schweißstellen 6 versehen, die zueinander parallel ausgerichtet und in Reihen angeordnet sind, wobei die einzelnen Schweißstellen 6 einer Reihe gegenüber den Schweißstellen 6 einer benachbarten Reihe gegeneinander versetzt angeordnet sind.

Gemäß einer nicht dargestellten Ausführungsform eines bahnförmigen Isolationskörpers 1 verlaufen die Schweißstellen 6 parallel zu dessen Längsrändern und — im Gegensatz zu Figur 1 — nicht unterbrochen, sondern durchgehend.

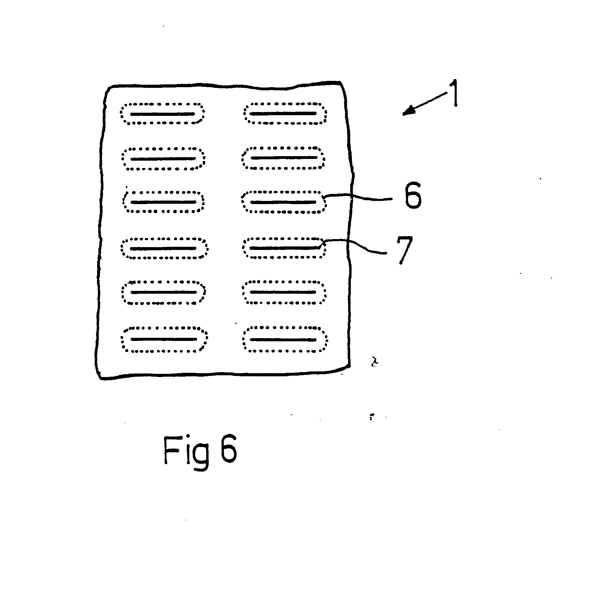

Gemäß Figur 6 sind die Schweißstellen 6 in einem Muster angeordnet, wobei die Schweißstellen 6 zueinander parallel ausgerichtet sind, in parallelen Reihen angeordnet, aber entgegen Figur 1 nicht zueinander versetzt sind.

In der Längsachse einer solchen streifenförmigen Schweißstelle 6 sind nun hier Schlitze 7 angeordnet, die und insbesondere deren Enden von den Rändern der Schweißstelle 6 — hier gleichmäßig — beabstandet sind. Diese Schlitze 7 durchdringen den gesamten Isolationskörper 1, was sich am besten aus der Figur 5 ergibt. Durch die gasdichte Verschweißung der drei Lagen kann im Bereich der Schlitze 7 weder Feuchtigkeit, noch Gas, wie Luft od. dgl. in die die Fasern enthaltende Zwischenschicht 5 eindringen.

Die Verschweißung der Fasern im Bereich der Schweißstellen 6 und der Schlitze 7 bewirkt auch, daß die Schlitze 7 nicht weiterreißen können, wodurch der Isolationskörper 1 trotz der Schlitze sehr stabil ist.

Bei über die gesamte Länge des Isolationskörpers 1 durchgehenden Schweißstellen 6 können die Schlitze 7 gegeneinander versetzt, wie in Figur 6 dargestellt, angeordnet sein.

Ein Isolationskörper 1 mit einer Schlitzanordnung und z. B. einer Schweißstellenanordnung gemäß Figur 1 kann nun quer zur Längserstreckung der Schlitze 7 sehr leicht gedehnt werden, wobei sich die Schlitze öffnen.

Soll ein solcher Isolationskörper 1 zum Abdecken von Pflanzenkulturen verwendet werden, so paßt er sich der äußeren Form der Pflanzen an. Insbesondere läßt sich ein solcher Isolationskörper auch als sogenannte « wachsende Folie » verwenden, wie sie in der DE-A-2.450.114 beschrieben ist. Gegenüber der dort beschriebenen « wachsenden Folie » hat der hier gezeigte und beschriebene Isolationskörper 1 den großen Vorteil, daß die Wärmedämmung um ein Vielfaches größer ist. In der Zwischenschicht 5 eingeschlossene, zwischen den Fasern 4 vorhandene Luft, die nicht ausgetauscht oder bewegt wird, dient als Isolationsschicht. Die zwischen den Schweißstellen 6 ungebundenen Fasern 4 halten die beiden Kunststoffolien 2 und 3 voneinander getrennt, sodaß — je nach Menge der vorhandenen Fasern 4 — relativ viel Luft zwischen den Kunststoffolien 2 und 3 vorhanden ist.

Bei einer solchen Verwendung kann der Abstand von zueinander parallelen Reihen von Verbindungsstellen 6 mit Schlitzen 7 und die Schlitzlänge zwischen 1 cm und 5 cm betragen, wobei eine Übereinstimmung zwischen beiden nicht erforderlich ist. Der Abstand zwischen den Schlitzen 7 einer Reihe sollte geringer, als die Schlitzlänge sein und z. B. bei 3 cm langen Schlitzen 7 etwa 1 cm betragen. Das Gewicht der Fasern 4 der Zwischenschicht 5 kann bei 30 g/m² liegen, während das Gewicht der aus Plastikfolien bestehenden Außenschichten 2 und 3 so garing als möglich sein sollte, andererseits diese Folien so stabil sein müssen, daß sie von den Pflanzen nicht zerstört werden.

Ein solcherart mit Durchbrechungen 7 versehener Isolationskörper 1 kann auch als Gartentunnel verwendet werden. Sind anstelle der Schlitze 7 z. B. Löcher vorgesehen, so können den Tunnel tragende Stäbe durch diese Löcher hindurch geschoben und Halteeinrichtungen durch die Löcher hindurch im Boden befestigt werden. Ein solcher Gartentunnel wirkt durch die zwischen den beiden Außenschichten 2 und 3 eingeschlossene Luft sehr stark wärmeisolierend, andererseits kann durch die Durchbrechungen 7 hindurch noch ein Luftaustausch stattfinden.

Durch die Durchbrechungen 7 können auch Beschwerungselemente geschoben werden ; dies ist aber bei längs eines bahnförmigen Isolationskörpers 1 vorgesehenen Verbindungsstellen 6 auch zwischen zwei Reihen solcher Verbindungsstellen möglich.

Ein Isolationskörper mit unversetzten Schlitzen 7, wie z. B. in Figur 6 dargestellt, oder mit Löchern anstelle der Schlitze, eignet sich z. B. als Bettdecke, die zum einen ihre Gesamtfläche immer beibehält und gleichmäßig isolierend wirkt, andererseits aber einen Luft- und Feuchtigkeitsausgleich zuläßt.

Ein solcher Isolationskörper 1, insbesondere, wenn er als Zwischenschicht 5 Fasern 4 enthält, kann auch als Ausgangsmaterial für Kleidung benutzt werden, indem dieser flächige Isolationskörper z. B. in bestimmte Formen geschnitten wird, die dann zu Kleidungsstücken verbunden, z. B. verklebt, verschweißt oder vernäht, werden. Dabei ist — insbesondere beim späteren Vernähen — darauf zu achten, daß an den Schneidestellen wieder eine gas- und flüssigkeitsdichte Verbindung, wie Verschweißung oder Verklebung, der beiden Außenschichten 2 und 3 erfolgt. So kann ein Schneiden unter Wärmeeinwirkung durchgeführt werden, z. B. durch Trennschweißen.

Bei einem solchen als Textilmaterial verwendeten Isolationskörper kann mindestens eine Außenschicht 2 und/bzw. 3 aus einem faserhaltigen Material, wie einem Gewebe, einem Spunbond, einem verfestigten Vlies, wie z. B. einem Nadelvlies bestehen. Die Zwischenschicht 5 kann dann Schweiß oder dergleichen Ausdünstungen aufnehmen. Ist die andere Außenschicht selbst gas- und dampfdicht, so kann von der anderen Seite her im wesentlichen nichts in die Zwischenschicht 5 eindringen.

Gemäß einer nicht dargestellten Ausführungsform der Erfindung können auch zwei solcher Isolationskörper 1 z. B. sackartig an ihren Rändern miteinander verbunden werden. Dabei kann dann außerhalb des Sackes jeweils eine Folie als Außenschicht des einzelnen Isolationskörpers und innen im Sack jeweils ein Textilmaterial angeordnet sein. Diese Ausbildung läßt sich z. B.

als Schlafsack verwenden, der eine Wasseraufnahme von außen erschwert oder verhindert, innen aber Schweiß und andere Ausdünstungen aufnehmen kann.

Ein solcher sackartiger, doppelter Isolationskörper kann auch mit anderen Materialien gefüllt sein. Dann kann es zweckmäßig sein, die beiden Außenschichten des einzelnen Isolationskörpers jeweils auszutauschen, d. h., die Folie im Innern des Sackes und das Textilmaterial außen anzuordnen.

Bei der Herstellung eines in der Zwischenschicht 5 Fasern aufweisenden Isolationskörpers 1 kann z. B. eine die Fasern enthaltende Zwischenschicht und darüber eine schrumpfbare Folie 2 auf eine nicht schrumpfbare Folie 3 gelegt, mit dieser an oben beschriebenen Verbindungsstellen 6 verbunden und die Durchbrechungen 6 eingebracht werden, woraufhin der Isolationskörper 1 unter Schrumpfung nur der einen Folie 3 einem Schrumpfungsprozeß unterworfen wird. Dadurch wölbt sich die nicht schrumpfende Folie 3 und man erhält einen Isolationskörper 1, der auf seiner einen Seite im wesentlichen eben ist. Zum dauernden Erhalt von Fasern enthaltenden Hohlräumen kann ein über die Länge einer Bahn durchgehende streifenförmigen Verbindungsstellen 6 aufweisender Isolationskörper 1 quer zu diesen Verbindungsstellen 6 weitere, als Abschweißungen zu verstehende, einzelne Hohlräume abschließende Verbindungsstellen aufweisen. Dadurch kann das Gas aus den die Zwischenschicht 5 bildenden Hohlräumen auch dann nicht entweichen, wenn ein Druck auf den Isolationskörper 1 ausgeübt wird.

Die eine Außenschicht kann aber auch schon « wellblechartig » vorgeformt auf die andere Außenschicht aufgebracht werden und mit dieser verbunden werden, wobei sich die dann z. B. streifenförmigen Verbindungsstellen 6 in den auf der anderen Außenschicht aufliegenden Wellentälern der ersten Außenschicht befinden. Die Fasern können sich dabei nur in den Zwischenräumen zwischen beiden Außenschichten befinden oder vollflächig angeordnet sein.

Auch ist es möglich, die eine Außenschicht in Falten zu legen, auf die andere Außenschicht aufzulegen und insbesondere an den Stellen, an denen die gefaltete Außenschicht nur in einer Lage vorliegt, die Verbindungsstellen anzubringen. Die Fasern können dann vorher in die Falten eingebracht oder auch hier vollfächig verteilt werden.

Bezugszeichenliste

1 Isolationskörper
2 Kunststoffolie
3 Kunststoffolie
4 Faser
5 Zwischenschicht
6 Schweißstelle
7 Durchbrechung/Schlitz

**Patentansprüche**

1. Mehrlagiger Isolationskörper mit zwei Außenschichten (2, 3), die mindestens teilflächig miteinander verbunden sind, dadurch gekennzeichnet, daß zwischen den beiden Außenschichten (2, 3) eine Fasern (4) enthaltende Zwischenschicht (5) angeordnet ist, mindestens die beiden Außenschichten an Verbindungsstellen (6) teilflächig miteinander verbunden sind und im Bereich der Verbindungsstellen (6) den ganzen Isolationskörper (1) durchdringende Durchbrechungen (7) angeordnet sind.

2. Isolationskörper nach Anspruch 1, dadurch gekennzeichnet, daß mindestens die beiden Außenschichten (2, 3) an als Schweißstellen ausgebildeten Verbindungsstellen (6) miteinander verschweißt sind.

3. Isolationskörper nach einem der Ansprüche 1 oder 2, dadurch gekennzeichnet, daß die Verbindungsstellen (6) streifenförmig ausgebildet sind und vorzugsweise über den ganzen Isolationskörper (1) verteilt angeordnet sind.

4. Isolationskörper nach dem vorhergehenden Anspruch, dadurch gekennzeichnet, daß der Isolationskörper (1) bahnförmig ausgebildet ist und die streifenförmigen Verbindungsstellen (6) parallel zu den Längsrändern der Bahn ausgerichtet sind.

5. Isolationskörper nach dem vorhergehenden Anspruch, dadurch gekennzeichnet, daß die Verbindungsstellen (6) sich durchgehend über die gesamte Länge der Bahn erstrecken.

6. Isolationskörper nach einem der Ansprüche 1 bis 4, dadurch gekennzeichnet, daß die Verbindungsstellen (6) in zu den Rändern der Bahn parallelen Reihen angeordnet sind.

7. Isolationskörper nach dem vorhergehenden Anspruch, dadurch gekennzeichnet, daß die Verbindungsstellen (6) einander benachbarter Reihen gegeneinander versetzt, vorzugsweise einander überlappend, angeordnet sind.

8. Isolationskörper nach einem der Ansprüche 1 bis 3, dadurch gekennzeichnet, daß die streifenförmigen Verbindungsstellen (6) über die Fläche des Isolationskörpers (1) ein Muster bildend ausgerichtet sind.

9. Isolationskörper nach einem der vorhergehenden Ansprüche, dadurch gekennzeichnet, daß mindestens eine der beiden, vorzugsweise beide Außenschichten (2, 3) aus einem gas- und dampfdichten Material, vorzugsweise einer Folie besteht bzw. bestehen.

10. Isolationskörper nach einem der vorhergehenden Ansprüche, dadurch gekennzeichnet, daß die Durchbrechungen (7) die gesamte Dicke des Isolationskörpers (1) durchdringende Schlitze sind, die vorzugsweise kürzer sind, als die Verbindungsstellen (6) lang und insbesondere mittig auf der Längsachse streifenförmiger Verbindungsstellen (6) verlaufen.

11. Isolationskörper nach dem vorhergehenden Anspruch, dadurch gekennzeichnet, daß bei streifenförmigen, in zueinander parallelen Reihen angeordneten Verbindungsstellen (6) die Schlitze (7) benachbarter Reihen gegeneinander versetzt und vorzugsweise sich überlappend angeordnet sind.

12. Isolationskörper nach einem der vorhergehenden Ansprüche, dadurch gekennzeichnet, daß wenigstens eine der beiden Außenschichten (2, 3), insbesondere die aus dem gas- und dampfdichten Material bestehende Außenschicht außerhalb der Verbindungsstellen (6) Durchbrechungen, vorzugsweise Schlitze, aufweist.

13. Isolationskörper nach einem der vorhergehenden Ansprüche, dadurch gekennzeichnet, daß der bahnförmige Isolationskörper (1) an seinen Längsrändern Beschwerungen, vorzugsweise ein oder mehrere Beschwerungselemente aufweist, die vorzugsweise zwischen den beiden Außenschichten (2, 3) angeordnet sind.

14. Isolationskörper nach einem der vorhergehenden Ansprüche, dadurch gekennzeichnet, daß die Fasern (4) Kunstfasern sind und vorzugsweise die Fasern (4) enthaltende Zwischenschicht (5) aus einem Faservlies besteht.

15. Isolationskörper nach einem der vorhergehenden Ansprüche, dadurch gekennzeichnet, daß die Fasern (4) in der Zwischenschicht (5) mit einem Flächengewicht von 10 bis 200 g/m$^2$, vorzugsweise mit einem Flächengewicht von 15 bis 50 g/m$^2$ vorliegen.

16. Verfahren zur Herstellung eines Isolationskörpers nach einem der vorhergehenden Ansprüche, dadurch gekennzeichnet, daß zwischen zwei Außenschichten (2, 3) eine Fasern (4) enthaltende Zwischenschicht (5) eingebracht wird, mindestens die beiden Außenschichten (2, 3) durch Schweißen oder Kleben miteinander verbunden werden und der Isolationskörper (1) im Bereich der Verbindungsstellen (6) mit Durchbrechungen (7) versehen wird.

17. Verfahren nach dem vorhergehenden Anspruch, dadurch gekennzeichnet, daß beim Schweißen die an der Schweißnaht liegenden Fasern (4) durch entsprechende Materialwahl und Hitzeeinwirkung aufgeschmolzen werden und dort als Fasern (4) zerstört und mit den beiden Außenschichten (2, 3) zu einer Masse verbunden werden.

18. Verfahren nach einem der beiden vorhergehenden Ansprüche, dadurch gekennzeichnet, daß beim Schweißen die an der Schweißnaht liegenden Fasern (4) durch entsprechende Materialwahl und Hitzeeinwirkung nur angeschmolzen werden, als Fasern (4) erhalten bleiben und zwischen den beiden Außenschichten (2, 3) verklebt werden.

19. Verfahren nach einem der Ansprüche 16 bis 18, dadurch gekennzeichnet, daß der Isolationskörper (1) im Bereich von streifenförmigen Verbindungsstellen (6) vorzugsweise in deren Längsrichtung durch die drei Schichten (2, 3, 4) hindurch mit Schlitzen versehen wird.

20. Verwendung des Isolationskörper nach einem der Ansprüche 1 bis 15 zur Wärme- und/oder Feuchtigkeitsdämmung von Pflanzen, Menschen und Tieren, Maschinen, Bauwerken od. dgl. als Schutzfolie.

# Claims

1. Multi-layer insulating body with two outer layers (2, 3) which are joined together at least over part of the area, characterised in that between the two outer layers (2, 3) is arranged an intermediate layer (5) containing fibres (4), at least the two outer layers being joined together over part of the surface at connecting points (6) and openings (7) being arranged passing through the whole of the insulating body (1) in the region of the connecting points (6).

2. Insulating body according to Claim 1, characterised in that at least the two outer layers (2, 3) are welded together at connecting points (6) in the form of welding points.

3. Insulating body according to one of Claims 1 or 2, characterised in that the connecting points (6) are strip-shaped and preferably arranged distributed over the whole insulating body (1).

4. Insulating body according to the preceding claim, characterised in that the insulating body (1) is of strip-like shape and the strip-shaped connecting points (6) are directed parallel to the longitudinal edges of the strip.

5. Insulating body according to the preceding claim characterised in that the connecting points (6) extend continuously over the whole length of the strip.

6. Insulating body according to one of Claims 1 to 4 characterised in that the connecting points (6) are arranged in rows parallel to the edges of the strip.

7. Insulating body according to the preceding claim characterised in that the connecting points (6) of mutually adjacent rows are staggered in relation to one another, preferably overlapping one another.

8. Insulating body according to one of Claims 1 to 3 characterised in that the strip-shaped connecting points (6) are disposed over the surface of the insulating body (1) in the form of a pattern.

9. Insulating body according to one of the foregoing claims characterised in that at least one of the two, preferably both, outer layers (2, 3) comprise a gas-tight and vapour-tight material, preferably a film.

10. Insulating body according to one of the foregoing claims characterised in that the openings (7) are slits passing through the whole thickness of the insulating body (1) and preferably shorter than the connecting points (6) in length and extend in particular along and centrally on the longitudinal axes of the strip-shaped connecting points (6).

11. Insulating body according to the preceding claim characterised in that with strip-shaped connecting points (6) arranged in parallel rows, the slits (7) of adjacent rows are arranged staggered in relation to one another and preferably overlapping.

12. Insulating body according to one of the foregoing claims characterised in that at least one of the two outer layers (2, 3), especially the outer layer comprising gas-tight and vapour-tight material, has openings, preferably slits, outside the connecting points (6).

13. Insulating body according to one of the foregoing claims characterised in that the strip-shaped insulating body (1) has ballast at its longitudinal edges, preferably one or more ballast elements, which are preferably arranged between the two outer layers (2, 3).

14. Insulating body according to one of the foregoing claims characterised in that the fibres (4) are plastics fibres and preferably the intermediate layer (5) containing the fibres (4) comprises a non-woven fibre fabric.

15. Insulating body according to one of the foregoing claims characterised in that the fibres (4) in the intermediate layer (5) are present with a weight per unit area of 10-200 g/m², preferably a weight per unit area of 15-50 g/m².

16. Method of manufacturing an insulating body according to one of the foregoing claims characterised in that an intermediate layer (5) containing fibres (4) is introduced between two outer layers (2, 3), at least the two outer layers (2, 3) being joined together by welding or adhesive and the insulating body (1) being provided with openings (7) in the region of the connecting points (6).

17. Method according to the preceding claim characterised in that one welding of the fibres (4) lying at the welding seam, by appropriate choice of material and heating action, are fused and there they are destroyed as fibres (4) and bonded as a mass to the two outer layers (2, 3).

18. Method according to one of the two preceding claims characterised in that on welding of the fibres (4) lying at the welding seam, by appropriate choice of material and heating action, they are only softened but remain as fibres (4) and are caused to adhere between the two outer layers (2, 3).

19. Method according to one of Claims 16 to 18 characterised in that the insulating body (1) is provided with slits in the region of strip-shaped connecting points (6), preferably in the direction of its length and passing through the three layers (2, 3, 4).

20. The use of the insulating body according to one of Claims 1 to 15 for thermal and/or moisture barrier protection of plants, humans and animals, machines, structures or the like as a protective sheet.

# Revendications

1. Corps isolant à couches multiples à deux couches extérieures (2, 3) assemblées l'une à l'autre au moins sur une partie de la surface, caractérisé en ce que, entre les deux couches extérieures (2, 3), il est disposé une couche intermédiaire (5) contenant des fibres (4), qu'au moins les deux couches extérieures sont assemblées l'une à l'autre sur une partie de la surface en des points d'assemblage (6) et qu'à l'endroit des points d'assemblage (6) sont disposés des percements (7) traversant tout le corps isolant (1).

2. Corps isolant suivant la revendication 1, caractérisé en ce qu'au moins les deux couches extérieures (2, 3) sont assemblées l'une à l'autre par soudure en des points d'assemblage (6) formés comme points de soudure.

3. Corps isolant suivant l'une des revendications 1 ou 2, caractérisé en ce que les points d'assemblage (6) sont réalisés en forme de bandes et sont disposés, de préférence, répartis sur tout le corps isolant (1).

4. Corps isolant suivant la revendication précédente, caractérisé en ce que le corps isolant (1) est réalisé en forme de chemin et que les points d'assemblage (6) en forme de bandes sont orientés parallèlement aux bords longitudinaux du chemin.

5. Corps isolant suivant la revendication précédente, caractérisé en ce que les points d'assemblage (6) s'étendent en continu sur toute la longueur du chemin.

6. Corps isolant suivant l'une des revendications 1 à 4, caractérisé en ce que les points d'assemblage (6) sont disposés en rangées parallèles aux bords du chemin.

7. Corps isolant suivant la revendication précédente, caractérisé en ce que les points d'assemblage (6) de rangées adjacentes sont disposés en quinconce, de préférence en se recouvrant.

8. Corps isolant suivant l'une des revendications 1 à 3, caractérisé en ce que les points d'assemblage (6) sont orientés de manière à former un motif sur la surface du corps isolant (1).

9. Corps isolant suivant l'une des revendications précédentes, caractérisé en ce qu'au moins l'une des deux, de préférence les deux, couches extérieures (2, 3) se composent d'un matériau étanche aux gaz et à la vapeur, de préférence un film.

10. Corps isolant suivant l'une des revendications précédentes, caractérisé en ce que les percements (7) sont des fentes traversant toute l'épaisseur du corps isolant (1) qui sont, de préférence, plus courtes que les points d'assemblage (6) et, en particulier, se situent centralement sur l'axe longitudinal de points d'assemblage (6) en forme de bandes.

11. Corps isolant suivant la revendication précédente, caractérisé en ce que, dans le cas de points d'assemblage (6) en forme de bandes, disposés en rangées parallèles entre elles, les fentes (7) de rangées adjacentes sont disposées en quinconce et, de préférence, en se recouvrant.

12. Corps isolant suivant l'une des revendications précédentes, caractérisé en ce qu'au moins l'une des deux couches extérieures (2, 3), en particulier la couche extérieure composée du matériau étanche aux gaz et à la vapeur, présente des percements, de préférence des fentes, en dehors des points d'assemblage.

13. Corps isolant suivant l'une des revendications précédentes, caractérisé en ce que le corps isolant (1) en forme de chemin présente, à ses bords longitudinaux, des charges, de préférence un ou plusieurs éléments de charge, disposées de préférence entre les deux couches extérieures (2, 3).

14. Corps isolant suivant l'une des revendications précédentes, caractérisé en ce que les fibres (4) sont des fibres synthétiques et que la couche intermédiaire (5) contenant les fibres (4) se compose, de préférence, d'un voile de fibres.

15. Corps isolant suivant l'une des revendications précédentes, caractérisé en ce que les fibres (4) dans la couche intermédiaire (5), d'un poids aérolaire de 10 à 200 g/m$^2$, se présentent, de préférence, avec un poids aérolaire de 15 à 50 g/m$^2$.

16. Procédé de fabrication d'un corps isolant suivant l'une des revendications précédentes, caractérisé en ce que, entre deux couches extérieures (2, 3), il est posé une couche intermédiaire (5) contenant des fibres (4), qu'au moins les deux couches extérieures (2, 3) sont assemblées l'une à l'autre par soudure ou collage et que le corps isolant (1) est pourvu de percements (7) à l'endroit des points d'assemblage (6).

17. Procédé suivant la revendication précédente, caractérisé en ce que, lors du soudage, par un choix de matériau approprié et sous l'effet de la chaleur, les fibres (4) situées au cordon de soudure fondent et y sont détruites en tant que fibres (4) et forment une masse avec les deux couches extérieures (2, 3).

18. Procédé suivant l'une des deux revendications précédentes, caractérisé en ce que, lors du soudage, par un choix de matériau approprié et sous l'effet de la chaleur, les fibres (4) situées au cordon de soudure commencent à peine à fondre, sont conservées comme fibres (4) et sont assemblées par collage entre les deux couches extérieures (2, 3).

19. Procédé suivant l'une des revendications 16 à 18, caractérisé en ce que le corps isolant (1) est, à l'endroit de points d'assemblage (6) en forme de bandes, de préférence dans leur sens longitudinal, pourvu de fentes à travers les trois couches (2, 3, 4).

20. Utilisation du corps isolant suivant l'une des revendications 1 à 15 comme film protecteur pour l'isolation thermique et/ou contre l'humidité de plantes, personnes et animaux, machines, chantiers et autres.

Fig 1

Fig 2

"X"

"Y"

Fig 3

Fig 4

Fig 5

Fig 6